# EUROPEAN PATENT SPECIFICATION

(11) **EP 4 289 602 B1**
(45) Date of publication and mention of the grant of the patent: **14.01.2026**
(21) Application number: 23174643.9
(22) Date of filing: 22.05.2023
(51) Int. Cl.: B29C 65/00, B29D 29/10, F16G 1/10, F16G 1/28, B29D 29/00, F16G 5/20, F16G 5/08, B29D 29/06

(54) **ANNULAR DRIVE BELT**
RINGFÖRMIGER ANTRIEBSRIEMEN
COURROIE D'ENTRAÎNEMENT ANNULAIRE

(30) Priority: 10.06.2022 CN 202221445787 U
(43) Date of publication of application: 13.12.2023
(73) Proprietor: ContiTech Deutschland GmbH, 30175 Hannover (DE)
(72) Inventor: Li, Sanming, 30165 Hannover (DE); Lindemann, Peter, 30165 Hannover (DE); Yang, Tieshan, 30165 Hannover (DE); Cui, Baoping, 30165 Hannover (DE)
(74) Representative: Preusser, Andrea

(56) References cited:
- US-A- 5 709 761
- US-A- 5 961 760
- US-A1- 2006 165 939
- US-A1- 2019 177 889

## Description

### Technical Field

The present invention relates to an annular drive belt with low belt back noise during motive power transmission, in particular a multi-wedge belt.

### Background Art

Annular drive belts, especially multi-wedge belts, are often used in motor vehicle accessory systems to transmit motive power. The structure of a drive belt generally comprises a belt back layer, a cord layer as a tension member, and a profile layer, in particular a wedge-shaped profile layer, that meshes with grooves of driving and driven belt wheels. The belt back layer and profile layer are generally formed of rubber. When the drive belt transmits motive power, the belt back layer will contact an idler wheel and tensioner wheel or drive a low-power device. At present, a lap joining method is generally used for the forming joint in the belt back of an annular drive belt, but a drawback of this joining method is that the overlap results in a two-layer belt back joint, with the lower layer of cord at the joint position being displaced downward, thus causing noise or jitter in the accessory system. In the process of motive power transmission, the joint position of the belt back will cause vibration noise as it passes the idler wheel or tensioner wheel or drives the low-power device.

US 5 961 760 A discloses a V-ribbed belt comprising a laminate which both ends are butt-jointed with each other.

US 5 709 761 A discloses a method and a device for joining rubber sheets, wherein the height of the joint is at least 0,62 mm.

US 2006/165939 A1relates to the production of a waterproof seam between adjacent pieces of waterproof, water-vapor-permeable laminates.

US 2019/177889 A1 relates to a method of making weaving a tubular fabric of particular usefulness in power transmission belting and other technical applications.

To reduce the noise produced by the belt back of the drive belt in the process of motive power transmission, methods of joining the belt back in a butt joint exist in the prior art; for example, the butt joint of the belt back is sewn together, or an additional thin strip of non-woven fabric straddles the butt-joined ends of the belt back to join them together, and so on. However, these joining methods have the drawbacks of a complex operating process and low production efficiency.

For this reason, the present invention needs to propose a new technical solution to solve at least one of the many technical problems mentioned above.

### Summary of the invention

Based on the prior art mentioned above, an objective of the present invention is to reduce the noise produced by the belt back joint of a drive belt in the process of motive power transmission, and improve the production efficiency of the drive belt.

An annular drive belt of the present invention can be manufactured by a method, comprising the following steps:
a) providing a belt back layer;
b) pre-cutting the belt back layer to form an annular belt back sleeve;
c) forming a cord layer on the belt back sleeve;
d) forming a profile layer on the cord layer, for example by wrapping, to obtain a belt blank;
e) vulcanizing the belt blank;
wherein in step b), pressure is applied by means of a cutter to cut the belt back layer at a fixed length, a tip of the cutter having an oblique blade face extending from a top end of the tip to a base of the tip, a tip working thickness of the base of the tip corresponding to the oblique blade face being 1.8 mm - 3.6 mm, the oblique blade face facing toward the belt back sleeve to be formed and forming an angle of 10° - 55° with a surface of the belt back layer at a cutting position, such that the belt back layer is joined by a gapless butt joint to form the belt back sleeve. Here, the top end of the tip means the sharpest end of the tip.

Through much experiment and research, the applicant unexpectedly found that during pre-cutting, when the tip working thickness (the thickness of the base of the tip corresponding to the oblique blade face that performs cutting) of the cutter used is 1.8 mm - 3.6 mm, the oblique blade face forms an angle of 10° - 55° with the surface of the belt back layer and the oblique blade face that performs cutting is facing toward the belt back sleeve to be formed, then by cutting the belt back layer using pressure at the joint, it is possible to make the two joint end edges of the belt back layer aligned with each other and the end faces fitted tightly together, and firmly stuck together by the inter-rubber adhesive force, thus forming the butt joint. In the subsequent vulcanization process, the bonding force of the joint is further increased by rubber flow and crosslinking. With such a butt joint, the difference in height due to unevenness in the belt back of the drive belt is reduced to 0.08 mm - 0.20 mm compared with 0.38 mm - 0.68 mm in the case of a conventional lap joint, and the drawback of downward displacement of the cord below the joint position is notably mitigated, thus effectively reducing the noise produced when the belt back contacts the idler wheel in the process of motive power transmission. At the same time, with the method according to the present invention, the belt back butt joint can be fully stuck without any need for additional sewing or an auxiliary joining member, and does not break easily, so the drive belt production efficiency is increased and the product scrappage rate is reduced. The tip working thickness and the angle between the oblique blade face and the surface of the belt back layer will both have a decisive influence on the noise reduction effect and adhesive strength of the belt back joint.

Preferably, in step b) and/or step c) the belt back sleeve is fitted round a support apparatus, for example a drum or a support, and in step b) the belt back layer is cut at a fixed length according to an annular outer circumference of the support apparatus. According to the present invention, the belt back layer is pre-cut at a fixed length corresponding to the annular outer circumference of the support apparatus, so the annular belt back sleeve formed can be precisely fitted round the support apparatus, and joint overlap is avoided.

With regard to the vulcanization of the belt blank in step e), the belt blank may undergo mold-pressed vulcanization after being detached from the support apparatus, or the belt blank may undergo integral vulcanization directly while being retained on the support apparatus.

Preferably, in step b), a cutting pressure of the cutter is 0.3 MPa - 1.2 Mpa; this not only ensures that the joint is cut, but also will not cause any damage to the pre-cutting and forming equipment, in particular the support apparatus, for example a forming drum.

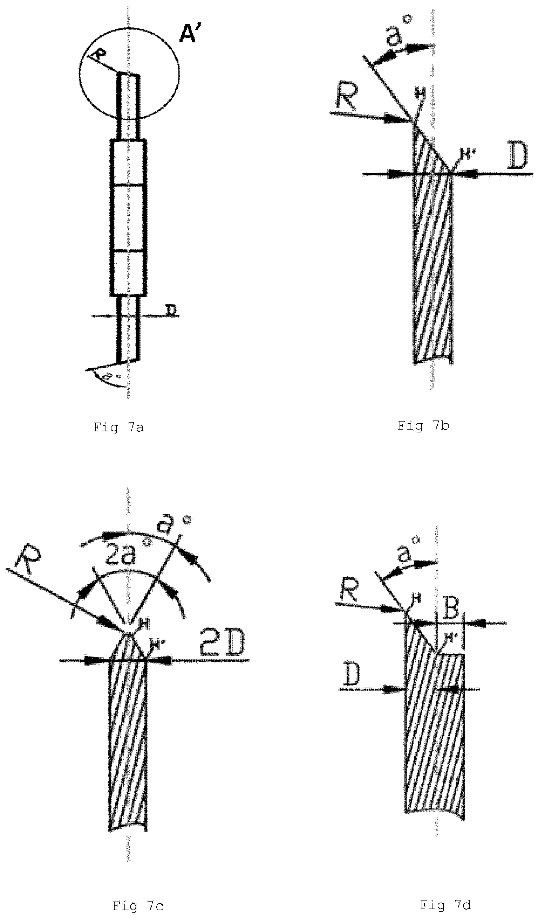

Preferably, in step b), the cutter performs cutting perpendicular to the surface of the belt back layer at the cutting position, and a tip angle between the oblique blade face and a cutter center plane is 35° - 80°. Here, the cutter center plane means a cutter center profile as shown by the dotted lines in Figs. 7a - 7f.

Preferably, in step b), an inner peripheral face or outer peripheral face of the belt back sleeve forms a belt back face, the joint is turned up from the belt back face, and a depression is correspondingly formed at the other side of the belt back layer. If the inner peripheral face of the belt back sleeve forms the belt back face, the entire annular drive belt will be turned over after being manufactured, so that the belt back face changes from the inner peripheral face of the annular sleeve to the outer peripheral face of the annular drive belt. The belt back face is used to bear and transmit a belt back load torque, or directly contacts a back component such as an idler wheel or tensioner wheel to form an accessory system. The up-turning at the belt back joint is formed by the pre-cutting and forming process of the present invention, and not only avoids the use of the lap joint in the prior art, thus helping to reduce noise, but also helps to press together the material, for example rubber, of the belt back layer at the joint; thus, the joint ends are firmly joined at the same time as the belt back layer is cut at the joint. A depression is correspondingly formed at the other side of the belt back layer at the joint, such that the up-turned part at least partially fills the depression in the process of vulcanization, thus helping to reduce the height of the up-turning.

Preferably, after step e), the height to which the joint is turned up based on the belt back face is no more than 0.2 mm. After vulcanization, the up-turned protrusion of the joint falls to a certain extent as a result of rubber flow, such that the height of up-turning is further reduced. The vast majority of the products finally obtained have up-turned protrusions at the joint, but the degree of up-turning is very small, 0.2 mm at the most, and generally appears nearly flat to the naked eye, requiring amplification with a microscope to be seen, so will not cause noticeable vibration noise. Various process factors might also result in a depression at the joint or a planar joint surface in some products.

Preferably, the tip of the cutter has one oblique blade face, or has two oblique blade faces which intersect with each other and are symmetrical with respect to a cutter center plane. If the tip has only one oblique blade face, when cutting is performed it is necessary to ensure that the oblique blade face is facing toward the belt back sleeve to be formed, i.e. away from the part that is removed by cutting. If the tip has two oblique blade faces intersecting with each other, one of the oblique blade faces is facing toward the belt back sleeve to be formed and forms an angle of 10° - 55° with the surface of the belt back layer at the cutting position to perform cutting. In this case, preferably, the two oblique blade faces are symmetrical with respect to the cutter center plane, such that the two oblique blade faces have the same slope and the same tip working thickness, thus simplifying cutter installation and avoiding installation errors in relation to blade direction. Of course, it is also possible for the two oblique blade faces to be asymmetrical with respect to the cutter center plane.

For a low-viscosity belt back layer material, preferably, a compression face that increases the cutter thickness adjoins a side of the oblique blade face that is remote from the top end of the tip. The compression face for example has a width of < 2.4 mm in the thickness direction of the cutter. The compression face helps to increase the bonding force of the belt back layer material, e.g. rubber.

An actual working face of the tip may have different profiles. According to some embodiments of the present invention, an actual working face of the tip that extends from the top end of the tip to the base of the tip is a plane, and the plane forms the oblique blade face. According to some other embodiments of the present invention, an actual working face of the tip that extends from the top end of the tip to the base of the tip is a non-planar face, wherein a virtual plane extending from the side of the actual working face at which the top end of the tip is located to the side at which the base of the tip is located forms the oblique blade face. The non-planar face may be a concave face, a corrugated face or a sawtooth face, or an irregular surface formed by a combination of two or three of a concave face, a corrugated face and a sawtooth face.

Preferably, in step a), a rubber layer is provided as the belt back layer, or a fabric layer and a rubber layer are joined to form the back belt layer. The rubber layer preferably uses EPDM rubber.

Preferably, the fabric layer is a machine-woven fabric, preferably an industrial fabric layer for drive belts or a cord fabric layer. The machine-woven fabric means a fabric woven on a loom from a set of warp yarns and a set of weft yarns mutually perpendicular to each other by having the warp and weft rise and fall and cross over each other according to the composition pattern. The yarn lying in the length direction of the fabric is called the warp, and the yarn lying in the transverse direction is called the weft. The industrial fabric for drive belts or the cord fabric is a special-use cloth of machine-woven fabric. The cord fabric uses strong plied yarns as the warp, and uses medium and fine single yarns as the weft; the woven rubber product uses a framework fabric, the warp yarns of which are arranged close together while the weft yarns are arranged further apart, resembling a curtain. The cord fabric is preferably a nylon cord fabric, which has favorable properties such as high strength, good heat resistance, good dimensional stability, and good adhesion to rubber. The industrial fabric for drive belts is preferably a woven fabric that is mixed-spun from cotton, polyester and elastane.

Preferably, the fabric layer is embedded in the rubber layer by dipping, laminating or frictioning. After the fabric layer and the rubber layer have been joined to form the belt back layer, one side serves as a contact face for being stuck to the cord, ensuring adhesion to the cord layer; the other side serves as a belt back face.

Preferably, in step a) the belt back layer has a thickness of 0.5 mm - 1.2 mm. This thickness means the total thickness of the belt back layer; if a fabric layer and a rubber layer are combined to form the belt back layer, it means the sum of the thicknesses of the fabric layer and the rubber layer. The thickness of the belt back layer will also have a certain effect on the belt back butt joint; for example, too thin a belt back layer is likely to lead to joint breakage, resulting in the product being scrapped; too thick a belt back layer will affect cutting and have an adverse effect on the dynamic properties of the drive belt, thus affecting the service life of the drive belt in the drive system. After vulcanization in step e), the thickness of the belt back layer material is compressed and becomes thinner, changing to 0.4 mm - 1.1 mm.

Preferably, the cord layer is formed by winding cord on the belt back sleeve; the winding is performed in a helical manner by tension. The cord of the cord layer is preferably made of a polyester material, nylon material, aramid material, glass fiber material or carbon fiber material. The cord serves as a framework material of the belt, and is used to transmit torque of the driving and driven belt wheels in the accessory system. The cord diameter is preferably in the range of 0.4 mm - 3.2 mm; the cords extend in the direction of motive power transmission, with a gap between the cords so that the rubber layer can pass through the gap to enclose the cords in the process of vulcanization. To improve adhesion between the cord and the rubber, the cord preferably undergoes adhesive surface treatment in advance, for example using an aqueous solution of resorcinol-formaldehyde-latex (commonly called "RFL emulsion"), rubber glue, etc. to infiltrate and enclose the cord core.

Preferably, the profile layer is made of rubber and/or plastic. The rubber is for example selected from natural rubber (NR), ethylene propylene diene monomer (EPDM) rubber, chloroprene rubber (CR), hydrogenated nitrile butadiene rubber (HNBR), nitrile butadiene rubber (NBR), cis-polybutadiene rubber (BR), styrene butadiene rubber (SBR), etc.; the plastic is for example selected from polyurethane (PU), polyethylene (PE), polyvinyl chloride (PVC), silicone rubber (SIR), Teflon (PTFE), etc. Further preferably, the profile layer is made of rubber, and especially preferably uses EPDM rubber.

The profile layer is used for meshing with the driving and driven belt wheels. Depending on the application, the profile layer may have one or more of the following profiles: planar, one or more wedge shapes in the length direction of the drive belt, one or more tooth shapes in the width direction of the drive belt, etc. Preferably, the profile layer is a multi-wedge layer, i.e. has multiple wedge shapes in the length direction of the drive belt. More preferably, a peripheral face of the profile layer has at least 3 wedge shapes in the length direction of the drive belt. These wedge shapes are arranged abreast in the belt width direction. The wedge shapes may be designed in accordance with standards GBT16588 and GB13552, for example using PH, PJ, PK, PL and PM wedge shapes. Depending on the application and the type of wedge shape, the number of wedge shapes may reach a maximum of 100. For motor vehicle accessory system applications, the PK wedge shape is preferably used, wherein the wedge height is 1.6 mm - 3.0 mm, and the number of wedge shapes is preferably 3 - 15.

The belt length, belt width and belt thickness of the annular drive belt made by the method of the present invention may vary with the application and the type of wedge shape. For example, the PK wedge shape for motor vehicle applications has a belt length of 650 mm - 3200 mm, a belt width of 10.38 mm - 53.40 mm, and a belt thickness of 3.5 mm - 6.5 mm.

Depending on the belt application scenario, short fibers are preferably added to the rubber of the belt back layer and/or profile layer, for example cotton fibers, nylon short fibers, aramid short fibers, etc., to enhance the transverse rigidity of the belt. Also preferably, a rubber additive is added to the rubber of the belt back layer and/or profile layer, for example a reinforcement material, a processing aid, a vulcanization crosslinker, a vulcanization promoter, a vulcanization activator, an industrial oil, etc.

Preferably, after step d) and before step e), a covering layer is stuck to circumferential surface of the profile layer, the covering layer being a fabric layer, preferably a knitted fabric layer, or a cotton fiber layer formed of cotton fibers of length 0.5 mm - 3.0 mm. Having short cotton fibers or fabric attached to the surface of the profile layer helps to improve the friction coefficient of the belt surface; this surface contacts the driving and driven belt wheels in the process of motive power transmission, transmitting the load torque of the accessory system, and thus helps to resist slippage between the belt and the belt wheels, further mitigating the problem of noise during belt use.

The cutter used in step b) may have different shapes, such as a sheet, a strip or a disk; a disk cutter is preferably used. The cutter's tip working thickness, tip angle, cutting angle and cutting pressure may be further adjusted according to the material of the belt back layer, in accordance with the invention concept of the present invention.

Preferably, the belt back layer is formed of a rubber layer; in this case, the tip working thickness of the base of the tip of the cutter corresponding to the oblique blade face is 1.8 mm - 2.3 mm, the oblique blade face forms an angle of 10° - 55° with the surface of the belt back layer at the cutting position, the cutting pressure of the cutter is 0.30 MPa - 0.50 MPa, and in step a) the belt back layer has a thickness of 0.5 mm - 1.2 mm. In this case, preferably, the cutter performs cutting perpendicular to the surface of the belt back layer at the cutting position, and a tip angle between the oblique blade face and a cutter center plane is 35° - 80°.

Also preferably, the belt back layer is formed of a fabric layer and a rubber layer joined together, the fabric layer being an industrial fabric layer for drive belts and preferably a cotton/polyester/elastane mixed-spun woven fabric; in this case, the tip working thickness of the base of the tip of the cutter corresponding to the oblique blade face is 2.1 mm - 3.6 mm, the oblique blade face forms an angle of 30° - 55° with the surface of the belt back layer at the cutting position, the cutting pressure of the cutter is 0.50 MPa - 0.80 MPa, and in step a) the belt back layer has a thickness of 0.6 mm - 1.2 mm. In this case, preferably, the cutter performs cutting perpendicular to the surface of the belt back layer at the cutting position, and a tip angle between the oblique blade face and a cutter center plane is 35° - 60°.

Preferably, the belt back layer is formed of a fabric layer and a rubber layer joined together, the fabric layer being a cord fabric layer and preferably a nylon cord fabric; in this case, the tip working thickness of the base of the tip of the cutter corresponding to the oblique blade face is 2.2 mm - 3.6 mm, the oblique blade face forms an angle of 15° - 55° with the surface of the belt back layer at the cutting position, the cutting pressure of the cutter is 0.65 MPa - 1.20 MPa, and in step a) the belt back layer has a thickness of 0.8 mm - 1.2 mm. In this case, preferably, the cutter performs cutting perpendicular to the surface of the belt back layer at the cutting position, and a tip angle between the oblique blade face and a cutter center plane is 35° - 75°.

To achieve the abovementioned technical objective, the present invention proposes an annular drive belt as defined in claim 1, comprising a belt back layer located at an outer periphery, a profile layer located at an inner periphery, and a cord layer located between the belt back layer and the profile layer, wherein the belt back layer has a gapless butt joint in the circumferential direction of the annular drive belt, a surface of the belt back layer forms a belt back face, and the joint is turned up from the belt back face. The profile layer has one or more of a planar profile, a wedge-shaped profile in the length direction of the drive belt, and a tooth-shaped profile in the width direction of the drive belt. The height to which the joint is turned up based on the belt back face is no more than 0.2 mm.

Preferably, the belt back layer is a rubber layer, or formed by joining together a rubber layer and a fabric layer.

Preferably, the fabric layer is a machine-woven fabric, preferably an industrial fabric layer for drive belts or a cord fabric layer.

Preferably, the belt back layer has a thickness of 0.4 mm - 1.1 mm. Preferably, the profile layer is made of rubber or plastic.

Preferably, an inner periphery of the profile layer has at least 3 wedge-shaped profiles extending in the length direction of the drive belt.

Preferably, a covering layer is applied to an inner peripheral surface of the profile layer, the covering layer being a fabric layer, preferably a knitted fabric layer, or a cotton fiber layer formed of cotton fibers of length 0.5 mm - 3.0 mm. Preferably, the cord layer is composed of multiple cords which extend in the circumferential direction of the annular drive belt and are spaced apart. Preferably, the annular drive belt is manufactured by the abovementioned method for manufacturing an annular drive belt according to the present invention.

The technical features and technical effects relating to the annular drive belt in the abovementioned method for manufacturing an annular drive belt are likewise applicable to the annular drive belt according to the present invention, so to avoid repetition are not described in detail again here.

The present invention has the following advantages: Firstly, the drive belt obtained by the present invention reduces the height difference due to unevenness in the belt back at the joint, thus effectively reducing the noise produced by the belt back in the process of motive power transmission. Secondly, the method according to the present invention firmly presses together the joint ends at the same time as cutting the belt back layer, without the need for additional sewing or an auxiliary joining member, thus increasing the drive belt production efficiency and reducing the product scrappage rate.

### Brief Description of the Drawings

The present invention is explained further below with reference to the drawings. All of the drawings use a simplified schematic form and imprecise proportions.
Fig. 1 shows an embodiment of the annular drive belt structure of the present invention in a cross section perpendicular to the drive belt plane.
Fig. 2 shows another embodiment of the annular drive belt structure of the present invention in a cross section perpendicular to the drive belt plane.
Fig. 3 shows a lap joint in a belt back layer of a drive belt in the prior art, in a longitudinal section perpendicular to the drive belt plane.
Fig. 4 shows a butt joint in the belt back layer of the drive belt of the present invention as an example, in a longitudinal section perpendicular to the drive belt plane.
Figs. 5a and 5b respectively show an industrial fabric for drive belts and a cord fabric structure used in the fabric layer in the belt back layer as examples.
Figs. 6a, 6c and 6d show schematically three belt back cutting methods, in cross-sectional views.
Fig. 6b shows an enlarged schematic drawing of cutting region A in Fig. 6a.
Fig. 7a shows schematically a sectional view of a disk cutter through a central shaft.
Figs. 7b - 7f respectively show enlarged schematic drawings of the tip region A' in Fig. 7a.

### Detailed Description of the Invention

To enable those skilled in the art to better understand the technical solution of the present invention, the technical solution of the present invention is described clearly and completely below in conjunction with embodiments and comparative examples. Obviously, the embodiments described are some, not all, of the embodiments of the present invention. All other embodiments obtained by those skilled in the art based on the embodiments in the present invention without creative effort shall fall within the scope of protection of the present invention.

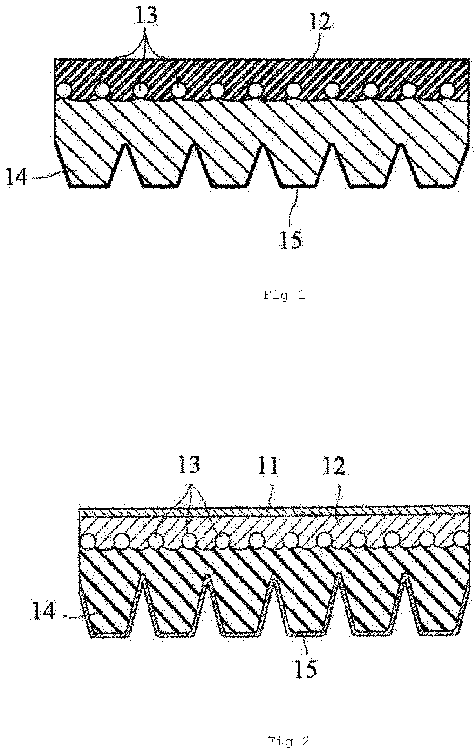

Fig. 1 shows an embodiment of the annular drive belt structure of the present invention in a cross section perpendicular to the drive belt plane. In sequence from an outer peripheral face to an inner peripheral face, the annular drive belt comprises a belt back layer formed of a rubber layer 12, a cord layer 13, a profile layer 14 formed of rubber, and a covering layer 15. The cord layer 13 is composed of multiple cords which extend in the circumferential direction of the annular drive belt and are spaced apart, and is enclosed in a rubber layer. An inner periphery of the profile layer 14 has 6 wedge shapes extending in the circumferential direction of the annular drive belt, the wedge shapes being PK wedge shapes designed in accordance with standards GBT16588 and GB13552. The covering layer 15 is a cotton fiber layer formed of short cotton fibers of length 0.5 mm - 3.0 mm. A drive belt outer peripheral face defined by the belt back layer forms a belt back face, which contacts an idler wheel in a transmission system; the profile layer meshes with driving and driven belt wheels.

Fig. 2 shows another embodiment of the annular drive belt structure of the present invention in a cross section perpendicular to the drive belt plane. This differs from the embodiment shown in Fig. 1 in that the belt back layer is formed by a fabric layer 11 and a rubber layer 12 joined together. Both the fabric layer 11 and the rubber layer 12 are annular; the stacked positions of the two layers in Fig. 2 is merely illustrative, and in practice, the fabric layer 11 may be embedded inside the rubber layer 12.

In embodiments which are not shown, the inner periphery of the profile layer 14 may have 3, 4, 5, 7, 8, 9, 10, 11, 12, 13, 14, 15 or more wedge shapes arranged abreast along the belt width.

In embodiments which are not shown, the inner periphery of the profile layer 14 my also have one or more of a planar profile, one or more tooth-shaped profiles in the width direction of the drive belt, and less than three wedge-shaped profiles in the length direction of the drive belt.

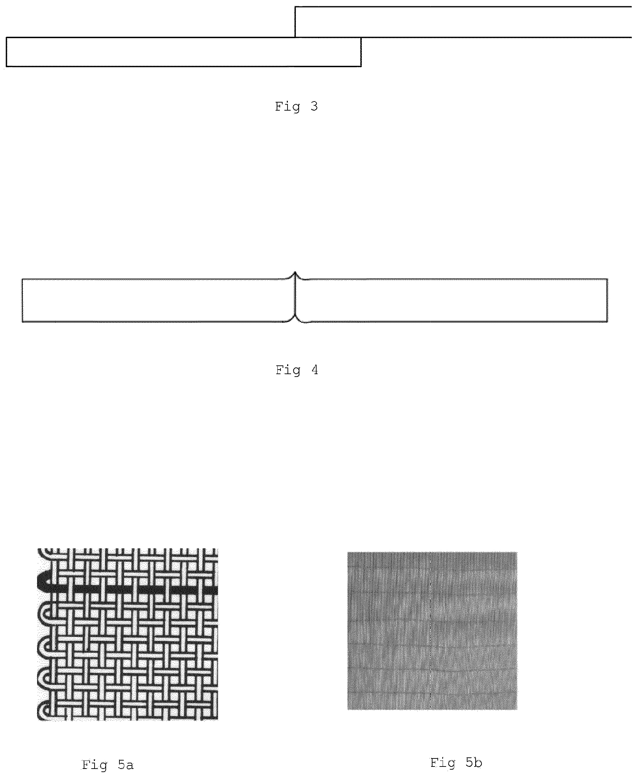

Fig. 4 shows an enlarged detail drawing of a butt joint in the belt back layer of the drive belt of the present invention as an example, in a longitudinal section perpendicular to the drive belt plane. Unlike the belt back layer lap joint in the prior art as shown in Fig. 3, which results in the joint having two obvious layers, the belt back layer joint of the present invention as shown in Fig. 4 is a gapless butt joint in the circumferential direction of the annular drive belt; the two joint end edges are aligned with each other and the end faces are fitted tightly together, and the joint is turned up and outward from the belt back face of the annular drive belt.

In some embodiments, various process factors might also result in a depression at the belt back layer joint or a planar joint surface in the finished drive belt product.

As examples, Figs. 5a and 5b respectively show two solutions for the structure of the fabric layer 11 in the embodiment shown in Fig. 2. Fig. 5a shows the structure of an industrial fabric layer for drive belts, used as the fabric layer 11; this takes the form of a cotton/polyester/elastane mixed-spun woven fabric. Alternatively, Fig. 5b shows a cord fabric structure used as the fabric layer 11; this takes the form of a nylon cord fabric.

The annular drive belt according to the present invention may be manufactured by a material preparation step, a forming step, a flocking step, a vulcanization step and a cutting step, which are described in detail below.

### Material preparation step

EPDM rubber is added to an internal mixer to undergo mastication. In accordance with application requirements, short fibers and rubber additives (including a reinforcement material, a processing aid, a vulcanization crosslinker, a vulcanization promoter, a vulcanization activator and an industrial oil) are added thereto. After mixing, a sheet is discharged as a mixed rubber sheet. The non-crosslinked rubber composition obtained (abbreviated as "mixed rubber") is formed into a sheet by means of a calender, producing a non-crosslinked rubber sheet. This is used for the rubber layers of the belt back layer and the profile layer. The rubber sheet containing fibers undergoes 90°cutting and splicing, to ensure that the direction of fiber orientation is the same as the belt width direction after calendering, thus serving to enhance the rigidity of the belt in the transverse width direction.

A fabric layer, for example an industrial fabric layer for drive belts or a cord fabric layer, undergoes dipping RFL treatment; a dipping, laminating or calendering/frictioning process is used to stick the rubber sheet and the fabric layer together; before use, cutting is performed, and splicing is performed with a 90-degree turn. After sticking together, a belt back layer containing a fabric layer is obtained. This step is omitted in the manufacture of a rubber-backed belt back layer structure containing no fabric layer.

The core of a cord undergoes RFL dipping treatment, and is used for a cord layer.

### Forming step

Using a sleeve pre-cutting device, a length is determined according to the outer circumference of a forming drum mold, and a belt back layer of a corresponding length is cut by a disk cutter; butt-joining is performed to form an annular belt back sleeve, which is then fitted round the forming drum, in such a way that the side with the greater rubber content is at the outside, to serve as a contact face adhered to the cord, while the side with the lower rubber content serves as a belt back face. The dipped cord is locked in a cord locking slot at an end of the forming drum; tension is applied to the cord, and the forming drum is rotated to wind the cord uniformly in a helical shape over the surface of the belt back sleeve, to form the cord layer. During the cord winding process, an EPDM rubber solution is applied by spraying. When cord winding is complete, the cord is wrapped in a layer of EPDM rubber sheet, which is used to form a profile layer; to join the ends of the profile layer, the ends are overlapped with an oblique cut, and after demolding, the joint is pressed together, avoiding too large a joint size which would cause noise during use.

### Flocking step

The profile layer rubber surface of the belt blank obtained by forming undergoes swelling treatment to make the surface sticky; 0.5 mm - 3.0 mm short cotton fibers are implanted into the surface to form a cotton fiber layer, which is left to stand for 8 hours or more. Instead of short cotton fibers, a knitted fabric layer may also be implanted into the profile layer surface.

### Vulcanization step

Having been flocked, the formed belt blank is put into a vulcanization cylinder with wedge-shaped grooves inside; a rubber boot is placed in a belt blank inner cavity, then sealing is performed. In the process of rubber boot vulcanization, after force is sustained, pressure is transmitted to the belt blank, which expands and sticks onto an inner surface of the vulcanization cylinder, to preliminarily form wedge shapes. Steam is then passed into a cavity of the vulcanization cylinder, and the cylinder transmits heat to the multi-wedge profile layer up to the entire thickness of the belt blank; the rubber, which has not undergone crosslinking, now undergoes crosslinking to form a single piece, and is combined with the cord and the optionally present belt back fabric layer to form a single piece, to finally form a vulcanized rubber sleeve with wedges on the inside. When the vulcanization process is complete, cooling to room temperature is performed. The vulcanized rubber sleeve with wedges on the inside is taken out of the vulcanization cylinder, and transferred to the cutting step.

### Cutting step

The vulcanized rubber sleeve is fitted into a cutting roller; a pressure roller with wedge shapes is used to press the rubber sleeve firmly, and cutting is performed according to a set number of cut wedge shapes. Once the entire sleeve has been cut, the belt is taken off and turned over, so that the annular belt is turned inside out, thus producing a multi-wedge annular drive belt.

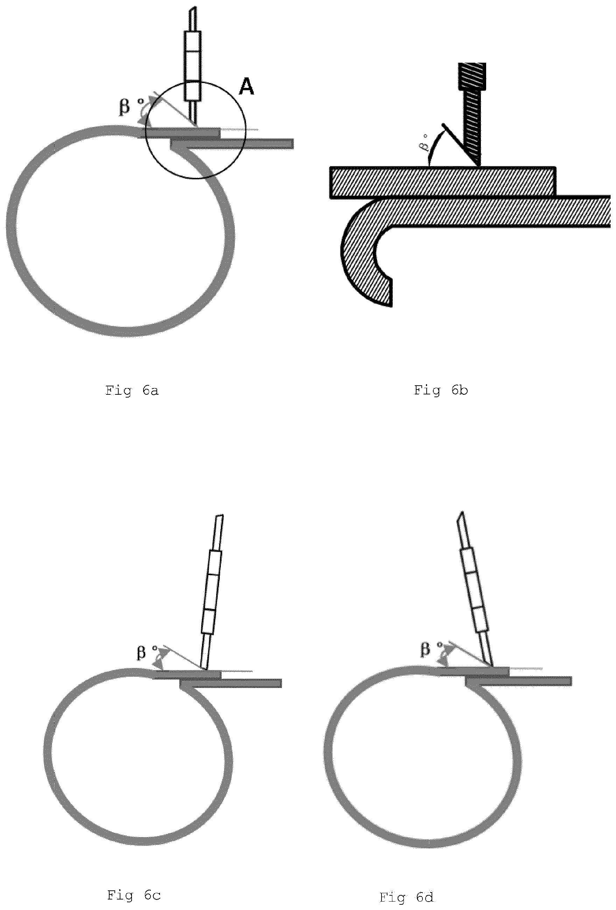

Figs. 6a - 6d show schematically, in cross-sectional views, three methods of cutting the belt back layer with the disk cutter in the forming step recounted above. As shown in the figures, the cutter performs the cut at the joint of the belt back layer which has been formed into a cylinder. Fig. 6a shows a cutting method in which the cutter performs the cut perpendicular to the belt back layer surface at the cutting position; the cutting region A in Fig. 6a is shown in enlarged form in Fig. 6b. As can be seen, a tip of the cutter has an oblique blade face extending from a top end of the tip to a base of the tip; the oblique blade face is facing toward the annular sleeve and forms an angle β of 10° - 55° with the belt back layer surface at the cutting position. Figs. 6c and 6d show cutting methods in which the cutter does not perform the cut perpendicular to the belt back layer surface at the cutting position; the cutter in Fig. 6c is tilted away from the annular sleeve, while the cutter in Fig. 6d is tilted toward the annular sleeve. These two methods share the following features with the method shown in Fig. 6a: the oblique blade face of the tip faces towards the annular sleeve in both cases, and forms an angle β of 10° - 55° with the belt back layer surface at the cutting position.

Fig. 7a shows schematically a sectional view, through a center mounting shaft, of the disk cutter used above, in which the dotted line shown represents a center plane of the cutter. Figs. 7b - 7f respectively show enlarged schematic drawings of the tip region A' in Fig. 7a.

Figs. 7b - 7d respectively show three types of tip structure demonstratively. The tip shown in Fig. 7b has only one oblique blade face, which extends from the top end H of the tip to the base **H'** of the tip. The thickness of the base of the tip corresponding to the oblique blade face forms a tip working thickness D, which is in the range of 1.8 mm - 3.6 mm. The oblique blade face and the cutter center plane indicated by the dotted line form a tip angle α. In the scenario shown in Figs. 6a and 6b in which the cutter performs the cut perpendicular to the belt back layer surface at the cutting position, the tip angle α is 35° - 80°.

The tip shown in Fig. 7c has two oblique blade faces intersecting each other, which each extend from the top end H of the tip to the base **H'** of the tip, and intersect at the top end H of the tip. These two oblique blade faces are symmetric with respect to the cutter center plane; the thickness of the base of the tip corresponding to each oblique blade face forms a tip working thickness D, which is in the range of 1.8 mm - 3.6 mm, and the total thickness of the blade is twice the tip working thickness D. Each oblique blade face and the cutter center plane indicated by the dotted line form a tip angle α. In the scenario shown in Figs. 6a and 6b in which the cutter performs the cut perpendicular to the belt back layer surface at the cutting position, the tip angle α is 35° - 80°, and the angle between the two oblique blade faces is twice the tip angle α. In some embodiments, the two oblique blade faces may also be asymmetrical with respect to the cutter center plane. When cutting is performed, one of the oblique blade faces is used to perform cutting and faces toward the annular sleeve.

The tip shown in Fig. 7d differs from the tip shown in Fig. 7b in that a compression face, which increases the cutter thickness, adjoins the side of the oblique blade face that is remote from the top end H of the tip; the compression face has a width B less than 2.4 mm in the cutter thickness direction, In some embodiments, a compression face which increases the cutter thickness may adjoin one side of one of the two oblique blade faces shown in Fig. 7c, or a compression face which increases the cutter thickness may adjoin each of the two sides of the two oblique blade faces.

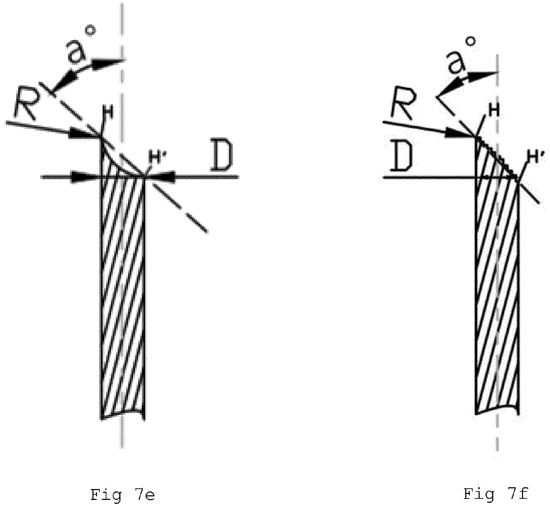

The actual working face of the tips shown in Figs. 7b - 7d is in each case a plane, which forms the oblique blade face. However, in some embodiments, the actual working face of the tip that extends from the top end H of the tip to the base **H'** of the tip could also be a non-planar face. In this regard, Figs. 7e and 7f respectively show two types of non-planar tip working faces schematically. In Fig. 7e, the actual working face of the tip that extends from the top end H of the tip to the base H' of the tip is a concave face; in this case, a virtual plane extending from the side of the actual working face at which the top end H of the tip is located to the side at which the base H' of the tip is located forms the oblique blade face. In Fig. 7f, the actual working face of the tip that extends from the top end H of the tip to the base H' of the tip is a sawtooth face; in this case, a virtual plane extending from the side of the actual working face at which the top end H of the tip is located to the side at which the base H' of the tip is located forms the oblique blade face.

The tips shown in Figs. 7b - 7f may be sharp at the top end H of the tip, but may also form a rounded corner, wherein the radius R value of the rounded corner is 0.1 mm - 1.5 mm, and the R value will slowly increase as the cutter is used; this will result in issues with the sharpness of the tip, which will in turn have an effect on cutting, so the tip should be replaced promptly when the R value exceeds the upper limit.

The multi-wedge annular drive belts of Examples 1 - 7 below are manufactured by the manufacturing process described above.

### Example 1:

The belt structure uses a rubber-backed belt back layer structure formed of a rubber layer (containing no fabric layer), the profile layer contains 6 PK wedge shapes arranged abreast along the belt width, and the multi-wedge belt has a belt length of 1253 mm. The thickness of the belt back layer before vulcanization is 0.5 mm. The tip working thickness D of the base of the tip of the disk cutter corresponding to the oblique blade face is 2.30 mm; the disk cutter performs the cut perpendicular to the belt back layer surface at the cutting position, the tip angle a between the oblique blade face and the cutter center plane is 80°, and the cutting pressure is 0.30 MPa.

### Example 2:

The belt structure uses a rubber-backed belt back layer structure formed of a rubber layer (containing no fabric layer), the profile layer contains 6 PK wedge shapes arranged abreast along the belt width, and the multi-wedge belt has a belt length of 1253 mm. The thickness of the belt back layer before vulcanization is 1.2 mm. The tip working thickness D of the base of the tip of the disk cutter corresponding to the oblique blade face is 1.8 mm; the disk cutter performs the cut perpendicular to the belt back layer surface at the cutting position, the tip angle a between the oblique blade face and the cutter center plane is 35°, and the cutting pressure is 0.50 MPa.

### Example 3:

The belt structure uses a belt back layer structure formed by joining rubber layers and a cotton/polyester/elastane mixed-spun woven fabric layer; the mixed-spun woven fabric undergoes 90° cutting and splicing and is then joined to the rubber by dipping, the rubber layers being stuck to both upper and lower surfaces of the mixed-spun woven fabric. The profile layer contains 6 PK wedge shapes arranged abreast along the belt width, and the multi-wedge belt has a belt length of 1253 mm. The thickness of the belt back layer before vulcanization is 0.6 mm. The tip working thickness D of the base of the tip of the disk cutter corresponding to the oblique blade face is 3.6 mm; the disk cutter performs the cut perpendicular to the belt back layer surface at the cutting position, the tip angle a between the oblique blade face and the cutter center plane is 60°, and the cutting pressure is 0.5 MPa.

### Example 4:

The belt structure uses a belt back layer structure formed by joining rubber layers and a cotton/polyester/elastane mixed-spun woven fabric layer; the mixed-spun woven fabric undergoes 90° cutting and splicing and is then joined to the rubber by laminating, the rubber layers being stuck to both upper and lower surfaces of the mixed-spun woven fabric. The profile layer contains 6 PK wedge shapes arranged abreast along the belt width, and the multi-wedge belt has a belt length of 1253 mm. The thickness of the belt back layer before vulcanization is 1.2 mm. The tip working thickness D of the base of the tip of the disk cutter corresponding to the oblique blade face is 2.1 mm; the disk cutter performs the cut perpendicular to the belt back layer surface at the cutting position, the tip angle a between the oblique blade face and the cutter center plane is 35°, and the cutting pressure is 0.8 MPa.

### Example 5:

The belt structure uses a belt back layer structure formed by joining rubber layers and a nylon cord fabric layer; the cord fabric undergoes 90° cutting and splicing and is then joined to the rubber by laminating, the rubber layers being stuck to both upper and lower surfaces of the cord fabric. The profile layer contains 6 PK wedge shapes arranged abreast along the belt width, and the multi-wedge belt has a belt length of 1253 mm. The thickness of the belt back layer before vulcanization is 0.8 mm. The tip working thickness D of the base of the tip of the disk cutter corresponding to the oblique blade face is 3.6 mm; the disk cutter performs the cut perpendicular to the belt back layer surface at the cutting position, the tip angle a between the oblique blade face and the cutter center plane is 75°, and the cutting pressure is 0.65 MPa.

### Example 6:

The belt structure uses a belt back layer structure formed by joining rubber layers and a nylon cord fabric layer; the cord fabric undergoes 90° cutting and splicing and is then joined to the rubber by calendering/frictioning, the rubber layers being stuck to both upper and lower surfaces of the cord fabric. The profile layer contains 6 PK wedge shapes arranged abreast along the belt width, and the multi-wedge belt has a belt length of 1253 mm. The thickness of the belt back layer before vulcanization is 1.2 mm. The tip working thickness D of the base of the tip of the disk cutter corresponding to the oblique blade face is 2.2 mm; the disk cutter performs the cut perpendicular to the belt back layer surface at the cutting position, the tip angle a between the oblique blade face and the cutter center plane is 35°, and the cutting pressure is 1.2 MPa.

### Example 7:

The belt structure uses a rubber-backed belt back layer structure formed of a rubber layer (containing no fabric layer), the profile layer contains 6 PK wedge shapes arranged abreast along the belt width, and the multi-wedge belt has a belt length of 1253 mm. The thickness of the belt back layer before vulcanization is 0.5 mm. The tip working thickness D of the base of the tip of the disk cutter corresponding to the oblique blade face is 2.30 mm; the disk cutter forms an angle of 80° with the belt back layer surface at the cutting position, the tip angle a between the oblique blade face and the cutter center plane is 70°, the angle β between the oblique blade face and the belt back layer surface is 10°, and the cutting pressure is 0.30 MPa.

For comparison with the present invention, the multi-wedge annular drive belts of Comparative examples 1 - 7 below are manufactured.

### Comparative example 1:

The belt structure uses a rubber-backed belt back layer structure formed of a rubber layer (containing no fabric layer), the profile layer contains 6 PK wedge shapes arranged abreast along the belt width, the belt back layer thickness before vulcanization is 0.5 mm, and the belt back sleeve forming process uses a lap joining method, as shown in Fig. 3. The other structural layer materials and the manufacturing process are the same as in Example 1.

### Comparative example 2:

The belt structure uses a rubber-backed belt back layer structure formed of a rubber layer (containing no fabric layer), the profile layer contains 6 PK wedge shapes arranged abreast along the belt width, and the belt back layer thickness before vulcanization is 0.5 mm. The tip working thickness D of the base of the tip of the disk cutter corresponding to the oblique blade face is 2.3 mm; the disk cutter performs the cut perpendicular to the belt back layer surface at the cutting position, the tip angle a between the oblique blade face and the cutter center plane is 85°, and the cutting pressure is 0.30 MPa. The other structural layer materials and the manufacturing process are the same as in Example 1.

### Comparative example 3:

The belt structure uses a rubber-backed belt back layer structure formed of a rubber layer (containing no fabric layer), the profile layer contains 6 PK wedge shapes arranged abreast along the belt width, and the belt back layer thickness before vulcanization is 0.5 mm. The tip working thickness D of the base of the tip of the disk cutter corresponding to the oblique blade face is 2.3 mm; the disk cutter performs the cut perpendicular to the belt back layer surface at the cutting position, the tip angle a between the oblique blade face and the cutter center plane is 30°, and the cutting pressure is 0.30 MPa. The other structural layer materials and the manufacturing process are the same as in Example 1.

### Comparative example 4:

The belt structure uses a belt back layer structure formed by joining a rubber layer and a cotton/polyester/elastane mixed-spun woven fabric layer, the profile layer contains 6 PK wedge shapes arranged abreast along the belt width, and the belt back layer thickness before vulcanization is 0.6 mm. The tip working thickness D of the base of the tip of the disk cutter corresponding to the oblique blade face is 1.6 mm; the disk cutter performs the cut perpendicular to the belt back layer surface at the cutting position, the tip angle a between the oblique blade face and the cutter center plane is 60°, and the cutting pressure is 0.65 MPa. The other structural layer materials and the manufacturing process are the same as in Example 3.

### Comparative example 5:

The belt structure uses a belt back layer structure formed by joining a rubber layer and a cotton/polyester/elastane mixed-spun woven fabric layer, the profile layer contains 6 PK wedge shapes arranged abreast along the belt width, and the belt back layer thickness before vulcanization is 0.6 mm. The tip working thickness D of the base of the tip of the disk cutter corresponding to the oblique blade face is 3.8 mm; the disk cutter performs the cut perpendicular to the belt back layer surface at the cutting position, the tip angle a between the oblique blade face and the cutter center plane is 60°, and the cutting pressure is 0.65 MPa. The other structural layer materials and the manufacturing process are the same as in Example 3.

### Comparative example 6:

The belt structure uses a belt back layer structure formed by joining a rubber layer and a nylon cord fabric layer, the profile layer contains 6 PK wedge shapes arranged abreast along the belt width, and the belt back layer thickness before vulcanization is 1.2 mm. The tip working thickness D of the base of the tip of the disk cutter corresponding to the oblique blade face is 2.2 mm; the disk cutter performs the cut perpendicular to the belt back layer surface at the cutting position, the tip angle a between the oblique blade face and the cutter center plane is 35°, and the cutting pressure is 0.2 MPa. The other structural layer materials and the manufacturing process are the same as in Example 6.

### Comparative example 7:

The belt structure uses a rubber-backed belt back layer structure formed of a rubber layer (containing no fabric layer), the profile layer contains 6 PK wedge shapes arranged abreast along the belt width, and the belt back layer thickness before vulcanization is 0.3 mm. The tip working thickness D of the base of the tip of the disk cutter corresponding to the oblique blade face is 2.3 mm; the disk cutter performs the cut perpendicular to the belt back layer surface at the cutting position, the tip angle a between the oblique blade face and the cutter center plane is 80°, and the cutting pressure is 0.30 MPa. The other structural layer materials and the manufacturing process are the same as in Example 1.

The joint thickness difference and noise of the drive belts obtained from Examples 1 - 7 and Comparative examples 1 - 7 are measured at the joint position, and the joint adhesive force of the belt back layer is measured, with the results being shown in Table 1.

The joint thickness difference means the perpendicular distance between the highest point of joint unevenness and the belt back plane. For the joint adhesive force, spliced joint test pieces are measured; the test piece width is 20 mm, the the length of the two ends of the joint is 100 mm, and a tension machine is used to clamp the two ends of the joint. The noise test is performed by means of a noise sensor installed beside an idler wheel; a noise test microphone is at a distance of 10 cm from the idler wheel, and in the test, the belt tension is set at 330 N ± 20 N while the rotation speed of a driving wheel is 750 rpm; the belt runs normally for 1 min on the test equipment, a noise curve is tested, and an average value is found and used as the noise test result.

**Table 1: Measurement results**

| | Joint thickness difference mm | Joint adhesive force N/20mm | Noise test dB(A) |
|---|---|---|---|
| Example 1 | 0.05 | 13 | 75 |
| Example 2 | 0.15 | 26 | 87 |
| Example 3 | 0.08 | 16 | 79 |
| Example 4 | 0.18 | 23 | 98 |
| Example 5 | 0.08 | 21 | 79 |
| Example 6 | 0.15 | 28 | 87 |
| Example 7 | 0.05 | 12 | 75 |
| Comparative example 1 | 0.42 | 52 | 136 |
| Comparative example 2 | - | Joint broke | - |
| Comparative example 3 | 0.25 | 35 | 112 |
| Comparative example 4 | - | Joint broke | - |
| Comparative example 5 | 0.28 | 18 | 118 |
| Comparative example 6 | | Joint could not be cut | |
| Comparative example 7 | 0.08 | 1.8N | 75 |

Based on the test results, it can be determined that for the belt back joints obtained according to Examples 1 - 7 of the present invention, the joint thickness difference did not exceed 0.2 mm, and the noise result was within the expected range of 70 - 100 dB (A); the noise was low, and the joint adhesive strength was high, so breakage will not occur.

The belt back lap joint in Comparative example 1 gave rise to a large joint thickness difference, resulting in a very high level of noise. The tip angle in Comparative example 2 was too large, resulting in insufficient joint adhesive force, so the joint broke. The tip angle in Comparative example 3 was too small, and the joint thickness difference obtained was large, resulting in a high level of noise. The tip working thickness in Comparative example 4 was too small, resulting in insufficient joint adhesive force, so the joint broke. The tip working thickness in Comparative example 5 was too large, and the joint thickness difference obtained was large, resulting in a high level of noise. In Comparative example 6, the cutting pressure of the cutter was too small, and consequently, the joint could not be cut. In Comparative example 7, the belt back layer thickness before vulcanization was too small; consequently, the joint had a very small adhesive force and broke easily, resulting in the product being scrapped, with a low pass rate.

For example, in contrast to the abovementioned embodiments in which the inner peripheral face of the belt back sleeve forms the belt back face, in some embodiments the outer peripheral face of the belt back sleeve may also form the belt back face; in this case, the cord layer, profile layer and covering layer are further applied to the inner periphery of the belt back sleeve, so when the sleeve has been cut, there is no need for it to be turned over.

## Claims

1. An annular drive belt, comprising a belt back layer located at an outer periphery, a profile layer (14) located at an inner periphery, and a cord layer (13) located between the belt back layer and the profile layer, wherein the profile layer has one or more of a planar profile, a wedge-shaped profile in the length direction of the drive belt, and a tooth-shaped profile in the width direction of the drive belt, wherein the belt back layer has a gapless butt joint in the circumferential direction of the annular drive belt, a surface of the belt back layer forms a belt back face, said annular drive belt being **characterised in that** the joint is turned up from the belt back face, wherein the height to which the joint is turned up based on the belt back face is no more than 0.2 mm.

2. The annular drive belt as claimed in claim 1, wherein the belt back layer is a rubber layer (12), or formed by joining together a rubber layer (12) and a fabric layer (11).

3. The annular drive belt as claimed in claim 2, wherein the fabric layer (11) is a machine-woven fabric.

4. The annular drive belt as claimed in claim 2, wherein the fabric layer (11) is an industrial fabric layer for drive belts or a cord fabric layer.

5. The annular drive belt as claimed in claim 1, wherein the belt back layer has a thickness of 0.4 mm - 1.1 mm.

6. The annular drive belt as claimed in claim 1, wherein the profile layer (14) is made of rubber or plastic.

7. The annular drive belt as claimed in claim 1, wherein an inner periphery of the profile layer has at least 3 wedge-shaped profiles extending in the length direction of the drive belt.

8. The annular drive belt as claimed in claim 1, wherein a covering layer (15) is applied to an inner peripheral surface of the profile layer (14), the covering layer being a fabric layer, or a cotton fiber layer formed of cotton fibers of length 0.5 mm - 3.0 mm.

9. The annular drive belt as claimed in any one of claims 1 - 8, wherein the cord layer (13) is composed of multiple cords which extend in the circumferential direction of the annular drive belt and are spaced apart.

## Patentansprüche

1. Ein ringförmiger Antriebsriemen, bestehend aus einer Riemenrückschicht am äußeren Rand, einer Profilschicht (14) am inneren Rand und einer Seilschicht
(13) befindet sich zwischen der Rückschicht des Riemens und der Profilschicht, wobei die Profilschicht ein oder mehrere ebene Profile, ein keilförmiges Profil in Längenrichtung des Antriebsriemens und ein zahnförmiges Profil in Breitenrichtung des Antriebsriemens aufweist, wobei die Rückseite des Riemens eine lückelose Stumpffuge in der Umfangsrichtung des ringförmigen Antriebsriemens besitzt, Eine Oberfläche des Bandes
10-Rückseite bildet eine Gurtrückseite, und das Gelenk wird von der Gürtelrückseite nach oben gedreht, wobei die Erhebung, auf die das Gelenk basierend auf der Rückseite des Gürtels nach oben gedreht wird, nicht mehr als 0,2 mm beträgt.

2. Der ringförmige Antriebsriemen, wie in Anspruch 1 behauptet, wobei die Rückschicht des Riemens eine Gummischicht (12) oder durch das Verbinden einer Gummischicht (12) und einer Stoffschicht (11) gebildet.

3. Der ringförmige Antriebsriemen wie in Anspruch 2 behauptet, wobei die Stoffschicht (11) ein maschinengewebtes Gewebe ist.

4. Der ringförmige Antriebsriemen, wie in Anspruch 2 behauptet, wobei die Stoffschicht (11) eine industrielle Stoffschicht für Antriebsriemen oder eine Schnurstoffschicht ist.

5. Der ringförmige Antriebsriemen, wie in Anspruch 1 behauptet, wobei die Rückschicht des Riemens hat eine Dicke von 0,4 mm bis 1,1 mm.

6. Der ringförmige Antriebsriemen, wie in Anspruch 1 beansprucht, wobei die Profilschicht (14) aus Gummi oder Kunststoff besteht.

7. Der ringförmige Antriebsriemen, wie in Anspruch 1 behauptet, wobei ein innerer Rand der Profilschicht mindestens drei keilförmige Profile in der Längenrichtung des Antriebsriems aufweist.

8. Der ringförmige Antriebsriemen, wie in Anspruch 1 behauptet, bei dem eine Überdeckungsschicht (15) auf eine innere periphere Oberfläche der Profilschicht (14) aufgetragen wird, wobei die Überdeckschicht eine Stoffschicht oder eine Baumwollfaserschicht aus Baumwollfasern der Länge 0,5 mm bis 3,0 mm ist.

9. Der ringförmige Antriebsriemen, wie in einem der Ansprüche 1 bis 8 beansprucht, wobei die Kordelschicht (13) aus mehreren Schnurn besteht, die sich in der Umfangsrichtung des ringförmigen Antriebsriemens erstrecken und voneinander entfernt sind.

## Revendications

1. Une courroie d'entraînement annulaire, composée d'une couche arrière de courroie située à une périphérie extérieure, d'une couche profilée (14) située à une périphérie interne, et d'une couche de cordon
(13) situé entre la couche arrière de la courroie et la couche profile, où la couche profilée possède un ou plusieurs profils plans, un profil en coin dans la direction de la courroie d'entraînement, et un profil en forme de dent dans la direction large de la courroie d'entraînement, où la couche arrière de la courroie présente un joint bout à bout sans espace dans la direction circonférentielle de la courroie d'entraînement annulaire, Une surface de la ceinture
couches arrière forment une face arrière de ceinture, et le joint est retourné vers le haut depuis la face arrière de la ceinture, la hauteur à laquelle le joint est levé en fonction de la face arrière de la ceinture n'étant pas plus de 0,2 mm.

2. La courroie annulaire telle que revendiquée dans la revendication 1, où la couche arrière de la courroie est une couche de caoutchouc (12), ou formée en assemblant une couche de caoutchouc (12) et une couche de tissu (11).

3. La courroie annulaire telle que revendiquée dans la revendication 2, où la couche de tissu (11) est tissée à la machine.

4. La courroie d'entraînement annulaire telle que revendiquée dans la revendication 2, où la couche de tissu (11) est une couche de tissu industriel pour les courroies d'entraînement ou une couche de tissu de corde.

5. La courroie annulaire telle que revendiquée dans la revendication 1, où la bande arrière est la couche 25 a une épaisseur de 0,4 mm à 1,1 mm.

6. La courroie d'entraînement annulaire telle que revendiquée dans la revendication 1, où la couche profilée (14) est en caoutchouc ou en plastique.

7. La courroie d'entraînement annulaire telle que revendiquée dans la revendication 1, où une périphérie interne de la couche profilée comporte au moins 3 profils en forme de coin s'étendant dans la direction de la courroie d'entraînement.

8. La courroie d'entraînement annulaire telle que revendiquée dans la revendication 1, où une couche de recouvrement (15) est appliquée sur une surface périphérique intérieure de la couche profilée (14), la couche de couverture étant une couche de tissu, ou une couche de fibre de coton formée de fibres de coton de longueur 0,5 mm à 3,0 mm.

9. La courroie annulaire telle que revendiquée dans l'une des revendications 1 à 8, où la couche de corde (13) est composée de plusieurs cordes qui s'étendent dans la direction circonférentielle de la courroie annulaire et sont espacées entre elles.
